# EUROPEAN PATENT SPECIFICATION

(11) **EP 0 645 862 B1**
(45) Date of publication and mention of the grant of the patent: **18.12.1996**
(21) Application number: 94306823.9
(22) Date of filing: 19.09.1994
(51) Int. Cl.: H02G 3/06

(54) **Spring clip fastener**
Federbefestigungsclip
Elément de retenue à attache élastique

(30) Priority: 24.09.1993 GB 9319779
(43) Date of publication of application: 29.03.1995
(73) Proprietor: DZUS FASTENER EUROPE LIMITED, Farnham, Surrey GU9 9PL (GB); RICH MULLER LTD, Birchwood, Warrington, Cheshire WA3 6PL (GB)
(72) Inventor: Wright, Andrew Charles Walden, Farnham, Surrey, GU9 8PU (GB)
(74) Representative: Brunner, Michael John

(56) References cited:
- WO-A-92/04755
- FR-A- 2 540 946

## Description

The present invention relates to a spring clip fastener and, more particularly, to such a fastener intended for use in a cable tray to fasten a component in or on the tray.

Cable trays and component parts are often assembled by means of elongate spring clips which pass through aligned pairs of respective apertures in the component and the tray. The spring clip may comprise an elongate spring strip part; at one end, a depending spacer and flange; and, at the other end, a depending, generally V-shaped, clip part which has a pair of legs, the free end of one of which engages the rear of the cable tray to latch the spring clip in position. Such a clip is disclosed in EP-A-0 599 634, published 1/6/94, filed 24/11/93 and claiming priorities 24/11/92 (GB 9 224 545), 11/2/93 (GB 9 302 759) and 24/9/93 (GB 9 319 779). Problems with such a clip arise on removal or release of the spring clip. Firstly, as there is often no access to the rear of the cable tray, it is difficult to compress the legs of the V-shaped clip part in order to release the spring clip and, secondly, partly as a result, the legs may be compressed beyond their elastic limit, preventing satisfactory re-use. Other types of clip with a broadly similar operative action are shown in FR-A-2 540 946 which discloses a spring clip with an elongate spring strip part having at each end a depending generally V-shaped clip part & WO-A-92 04755 which discloses a spring clip of spring steel rod bent into a V-shape to form a pair of parallel elongate spring rod parts, the apex of the V having a right-angled step forming a depending spacer and flange and the extremities of the rods having clip parts.

The present invention sets out to overcome the above mentioned problems and, accordingly, there is provided a spring clip for fastening together a pair of components having aligned apertures, the spring clip having an elongate spring strip part; at one end, a depending spacer and flange; and, at the other end, a depending, generally V-shaped, clip part, the free end of one leg of which has a recess or aperture adjacent to its edge to allow, in use, insertion of a tool for compression of the clip part and an abutment extending inwardly to engage the other leg of the clip part when it is compressed.

The recess or aperture and the abutment may be provided by an inturned substantially C-shaped flange.

The invention also includes a retaining flag which can be inserted into the gap between the legs of the V-shaped clip. The flag is dimensioned so as to be capable of insertion only when the V-shaped clip is fully engaged with the components and is an interference fit with the V-shaped clip in order to increase the security of engagement of the clip and ensure that accidental disengagement cannot occur. It also provides a visible check that the assembly is complete and secure.

One example of a spring clip according to the present invention will now be described with reference to the accompanying drawings in which:
Fig. 1 is a plan view of the installed clip;
Fig. 2 is a side view; and,
Fig. 3 is an end view.

The spring clip 1 is shown in the drawings connecting a component 2 to a cable tray 3. The component 2 and the cable tray 3 have multiple apertures allowing them to be located relative to one another in a number of different positions, the apertures being spaced at standard, regular, centres.

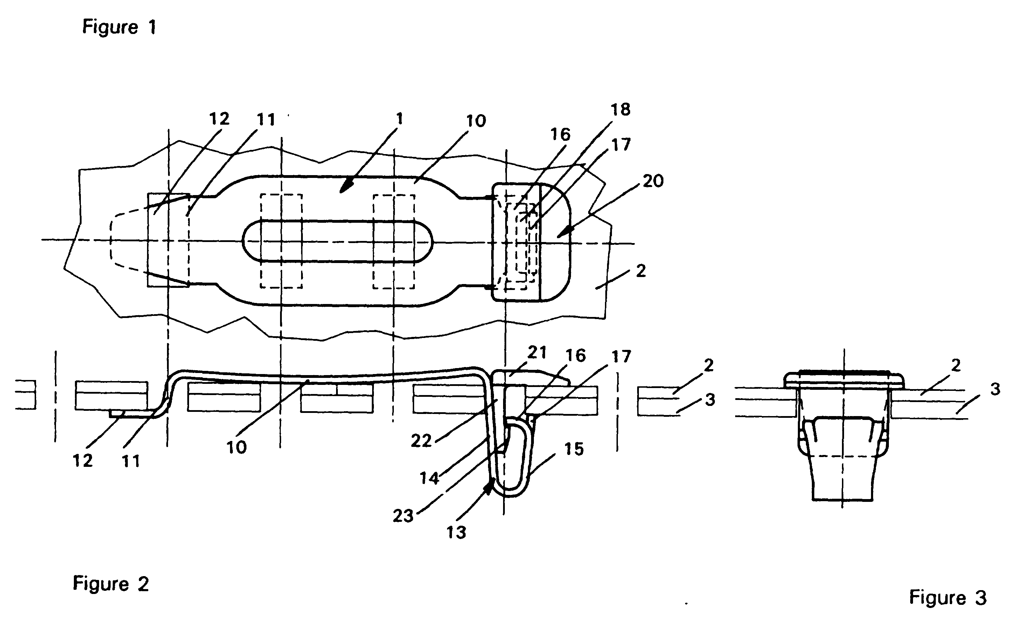

The spring clip comprises a generally flat spring steel member which has an elongate spring part 10 which is bent to provide the clamping force to hold the component 2 securely against the cable tray 3. At one end of the spring part 10, and integral with it, are formed a spacer 11 and flange 12, the spacer offsetting the flanges from the spring part 10 and thus allowing it to locate on the far side of the cable tray 3 from the component 2 and the spring part 10 as seen in Figure 2.

At the other end of the clip part 10 is formed a generally V-shaped clip 13, again integral with the spring part 10. The V-shaped clip 13 comprises a pair of legs 14, 15, the first 14 of which connects to the clip part 10 and depends away from it as seen in Figure 2, and the second 15 of which provides a latch to retain the spring clip on the assembled component and cable tray. The leg 15 is shorter than the leg 14 and its free end can thus engage the underside of the casing tray 3. The leg 15 has an inturned flange 16 which, as best seen in Figure 1, comprises a C-shaped portion of the end of the leg 15 bent over towards the leg 14. The central portion 17 of the end of the leg 15 provides the abutment against the underside of the cable tray 3.

The inturned flange 16 provides two functions. Firstly, it provides an aperture 18 in the form of an elongate transverse slot (see Figure 1) by means of engagement with which the flat end of a tool such as a screw driver may be arranged to release the V-shaped clip 13 from engagement with the cable tray in order to release the spring clip. Secondly, however, the free end of the flange 16 provides an abutment against the leg 14 in order to prevent over-stressing of the V-shaped clip 13, when it is unclipped, in order to prevent deformation or damage to the clip 13 which might prevent its effective reuse.

A retaining flag 20 which provides a visible check that the assembly is complete and secure, is provided. The retaining flag 20 comprises a main or "flag" portion 21 and a depending leg 22 having a barb 23 to provide a shoulder. The retaining flag is dimensioned so as to be capable of insertion between the free end of the inturned flange 16 and the opposing side of the leg 14 only when the V-shaped clip 13 is in a position in which the leg 15 is spaced far enough from the leg 14 to be engaged with the underside of the cable tray 3. Also, due to the resilience of the V-shaped clip 13 it provides an interference fit pushing further apart the legs 14 and 15 and being held in position by the shoulder formed by the barb 23 engaging the underside of the inturned flange 16. Security is thus provided against inadvertent removal of the spring clip 1 and a visible indication is provided to ensure that secure installation can be checked prior to use.

## Claims

1. A spring clip (1) for fastening together a pair of components (2,3) having aligned apertures, the spring clip having an elongate spring strip part (10); at one end, a depending spacer (11) and flange (12); and, at the other end, a depending, generally V-shaped, clip part (13), the free end of one leg (15) of which has a recess or aperture (18) adjacent to its edge to allow, in use, insertion of a tool for compression of the clip part and an abutment (16) extending inwardly to engage the other leg of the clip part when it is compressed.

2. A clip according to claim 1, wherein the recess or aperture and the abutment are provided by an inturned substantially C-shaped flange (16).

3. A clip according to claim 1 or claim 2, comprising a retaining flag (20) which can be inserted into the gap between the legs (14,15) of the V-shaped clip part (13).

4. A clip according to claim 3, wherein the flag (20) is dimensioned so as to be capable of insertion only when the V-shaped clip part (13) is fully engaged with the components (2,3) and is an interference fit with the V-shaped clip part.

## Patentansprüche

1. Federclip (1) zum Aneinanderbefestigen eines Paares von Gegenständen (2, 3), die fluchtende Öffnungen haben, wobei der Federclip einen langgestreckten, streifenförmigen Federabschnitt (10) hat; einen abgewinkelten Abstandshalter (11) und einen Flasch (12) an dem eine Ende; und an dem anderen Ende ein abgewinkeltes, im wesentlichen V-förmiges Clipteil (13), wobei das freie Ende von dessen einem Schenkel (15) angrenzend an seine Kante eine Ausnehmung oder Öffnung (18) hat, um in der Gebrauchslage das Einführen eines Werkzeugs zum Zusammendrücken des Clipteils zu ermöglichen und ein Widerlager (16), das sich nach innen erstreckt, um beim Zusammendrücken des Clipteils mit dem anderen Schenkel in Eingriff zu stehen.

2. Clip nach Anspruch 1, wobei die Ausnehmung oder Öffnung und das Widerlager durch einen nach innen gebogenen, im wesentlichen C-förmigen Flansch (16) gebildet sind.

3. Clip nach Anspruch 1 oder 2, aufweisend eine Rückhalteplatte (20), die in den Spalt zwischen den Schenkeln (14, 15) des V-förmigen Clipteils (13) einsetzbar ist.

4. Clip nach Anspruch 3, wobei die Platte (20) so dimensioniert ist, daß ein Einschieben nur möglich ist, wenn das V-förmige Clipteil (13) vollständig im Eingriff mit den Gegenständen (2, 3) steht und daß sie eine Preßpassung mit dem V-förmigen Clipteil bildet.

## Revendications

1. Attache élastique (1) pour attacher ensemble une paire de composants (2, 3) présentant des ouvertures alignées, l'attache élastique présentant une partie de bande (10) allongée, élastique; à une extrémité, un écarteur pendant (11) et une bride (12); et à l'autre extrémité, une partie d'attache (13) pendante, présentant une forme générale en V, dont l'extrémité libre d'une branche (15) présente un creux ou ouverture (18) contigu à son bord pour permettre, en utilisation, l'insertion d'un outil en vue de la compression de la partie d'attache, et une butée (16) s'étendant vers l'intérieur, pour engager l'autre branche de la partie d'attache lorsqu'elle est comprimée.

2. Attache selon la revendication 1, dans laquelle le creux ou ouverture, et la butée sont fournis par une bride (16) courbée essentiellement en forme de C.

3. Attache selon la revendication 1 ou la revendication 2, comprenant une patte de retenue (20) qui peut être insérée dans l'interstice formé entre les branches (14, 15) de la partie d'attache (13) en forme de V.

4. Attache selon la revendication 3, dans laquelle la patte (20) est dimensionnée de manière à pouvoir être insérée uniquement lorsque la partie d'attache (13) en forme de V est entièrement engagée avec les composants (2, 3) et est jointe à ajustement serré sur la partie d'attache en forme de V.
